# EUROPEAN PATENT APPLICATION

(11) **EP 4 651 288 A1**
(43) Date of publication of application: **19.11.2025**
(21) Application number: 24781219.1
(22) Date of filing: 27.03.2024
(51) Int. Cl.: H01M 50/367, H01M 50/342, H01M 50/289, H01M 50/502, H01M 50/204

(54) **BATTERY PACK AND BATTERY DEVICE INCLUDING SAME**

(30) Priority: 28.03.2023 KR 20230040564
(71) Applicant: LG Energy Solution, Ltd., Seoul 07335 (KR)
(72) Inventor: KIM, Jae Wook, Daejeon 34122 (KR)
(74) Representative: Plasseraud IP
(86) International application number: PCT/KR2024/003858
(87) International publication number: WO 2024/205229

(57) **Abstract**

The present disclosure relates to a battery pack and a battery device including the same. A battery pack according to an embodiment of the present disclosure may include a plurality of battery modules, a housing accommodating the plurality of battery modules, and a venting cover coupled to the housing to cover the battery module and guiding the flow of gas released from the battery module, wherein the venting cover may include a cover body having a plurality of slits formed therein for passage of gas released from the battery module, and a separation protrusion protruding from the bottom surface of the cover body to separate the plurality of battery modules so that gas movement between the plurality of battery modules is prevented.

## Description

### TECHNICAL FIELD

### CROSS-REFERENCE TO RELATED APPLICATIONS

The present application claims priority to Korean Patent Application No. 10-2023-0040564 filed on March 28, 2023 in the Republic of Korea, the disclosures of which are incorporated herein by reference.

### TECHNICAL FIELD

The present disclosure relates to a battery pack and a battery device including the same.

### BACKGROUND ART

Secondary batteries are attracting attention as a new energy source to improve eco-friendliness and energy efficiency in that they have not only a primary advantage of dramatically reducing the use of fossil fuels, but also no by-products generated from the use of energy.

In the case of a battery pack including a large number of lithium secondary batteries, the entire battery pack may be damaged in the event of a fire and explosion. For example, when an event such as a short circuit or abnormal temperature rise between lithium secondary batteries occurs in some battery modules, a large amount of venting gas may be generated from the lithium secondary batteries, and if deterioration intensifies, high-temperature sparks including electrode active materials and aluminum particles may be ejected in addition to the venting gas. At this time, the venting gas and the high-temperature sparks cause thermal damage to adjacent battery modules, which greatly increases the risk of additional events occurring in other battery modules.

Therefore, when venting gas and high-temperature sparks are generated in some battery modules, there is a need for a gas venting path that may quickly and safely discharge the venting gas to the outside of the battery pack while minimizing the impact on other battery modules.

The above-described background technology is possessed or acquired by the inventor in the process of deriving the disclosure of the present application, and cannot necessarily be said to be a known technology disclosed to the general public prior to the present application.

### SUMMARY

### TECHNICAL PROBLEM

The present disclosure is designed to solve the problems of the related art, and therefore the present disclosure is directed to providing a battery pack provided with a gas flow path capable of preventing gas released from a battery module from spreading to neighboring battery modules.

The present disclosure is directed to providing a battery pack capable of reducing heat transfer between battery modules.

### TECHNICAL SOLUTION

A battery pack according to an embodiment of the present disclosure may include a plurality of battery modules, a housing accommodating the plurality of battery modules, and a venting cover coupled to the housing to cover the battery module and guiding the flow of gas released from the battery module, wherein the venting cover may include a cover body having a plurality of slits formed therein for passage of gas released from the battery module, and a separation protrusion protruding from the bottom surface of the cover body to separate the plurality of battery modules so that gas movement between the plurality of battery modules is prevented.

The separation protrusion may be located between two neighboring battery modules.

The venting cover may further include a guide unit formed on at least a portion of the perimeter of the slit and extending in a direction away from the slit.

The guide unit may include a first guide unit extending to one side of the cover body and a second guide unit extending to the other side of the cover body, wherein the first guide unit and the second guide unit may be disposed in a staggered arrangement.

The battery pack according to an embodiment of the present disclosure may further include a separation plate disposed between the plurality of battery modules to prevent heat transfer between the plurality of battery modules.

The separation plate may include a first plate extending from one end of the housing toward the other end, and a plurality of second plates disposed perpendicular to the first plate.

The plurality of second plates may be disposed side by side at a predetermined interval, and the battery module may be located between the neighboring second plates.

The battery pack according to an embodiment of the present disclosure may further include venting channels disposed on both sides of the housing and allowing gas passing through the slit to flow inside.

The battery pack according to an embodiment of the present disclosure may further include a valve plate disposed between the battery module and the venting channel, and capable of being ruptured open when the gas is released from the battery module.

The valve plate may be provided to block the gas flowing into the venting channel from flowing into the battery module in a state where it is not ruptured open.

A discharge unit provided to discharge the gas flowing from the venting channel to the outside of the housing may be formed in the housing.

The battery pack according to an embodiment of the present disclosure may further include a busbar electrically connecting the neighboring battery modules to each other, and an insulating unit surrounding a portion of the busbar to electrically insulate the busbar and the venting cover.

The insulating unit may be provided to surround the perimeter of the busbar at a central portion in the longitudinal direction of the busbar.

A battery device according to the present disclosure may be provided, and the battery device according to the present disclosure may include a plurality of battery packs reviewed above.

### ADVANTAGEOUS EFFECTS

The battery pack according to an embodiment of the present disclosure may be provided with a gas flow path capable of preventing gas released from a battery module from spreading to neighboring battery modules.

The battery pack according to an embodiment of the present disclosure may reduce heat transfer between battery modules.

In addition, effects that may be easily predicted by those skilled in the art from the configurations according to embodiments of the present disclosure may be included.

### BRIEF DESCRIPTION OF THE DRAWINGS

FIG. 1 shows an exploded perspective view of a battery pack according to Embodiment 1 of the present disclosure.
FIG. 2 shows a combined perspective view of a battery pack according to Embodiment 1 of the present disclosure.
FIG. 3 shows a top plan view of a venting cover.
FIG. 4 shows a partial perspective view taken along the cutting line A-A' in FIG. 3.
FIG. 5 shows a partial perspective view of a valve plate of a battery pack according to Embodiment 1 of the present disclosure.
FIG. 6 is a side view showing gas passing through a venting cover.
FIG. 7 is a plan view of the battery pack when viewed from above.
FIG. 8 is a side view showing gas directed toward a venting channel.
FIG. 9 is a perspective view showing the shapes of a busbar and an insulating unit of a battery pack according to Embodiment 2 of the present disclosure.
FIG. 10 is a partial schematic view showing the mounting form of a busbar and an insulating unit of a battery pack according to Embodiment 2 of the present disclosure.
FIG. 11 shows a partial perspective view taken along the cutting line A-A' in FIG. 10.

### DETAILED DESCRIPTION

Hereinafter, preferred embodiments of the present disclosure will be described in sufficient detail with reference to the accompanying drawings to enable persons having ordinary skill in the technical field pertaining to the present disclosure to easily carry out the present disclosure. The following description is one of several aspects of the embodiments, and in describing an embodiment, detailed descriptions of known functions or configurations will be omitted to clarify the gist of the present disclosure.

In affixing the reference numerals to the elements in each drawing in this specification, the identical or similar reference numerals are affixed to the identical or similar elements throughout the specification. Components included in any one embodiment and components including common functions will be described using the same designations in other embodiments. It should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

In addition, the present disclosure is not limited to the above-described embodiments, and various modifications and variations may be made from these descriptions by persons having ordinary skill in the field pertaining to the present disclosure. Therefore, the technical ideas of the present disclosure should not be limited to the above-described embodiments, and not only the claims to be described later, but also all things that are equivalent to or have equivalent modifications to the claims will fall within the scope of the technical ideas of the present disclosure.

### Embodiment 1

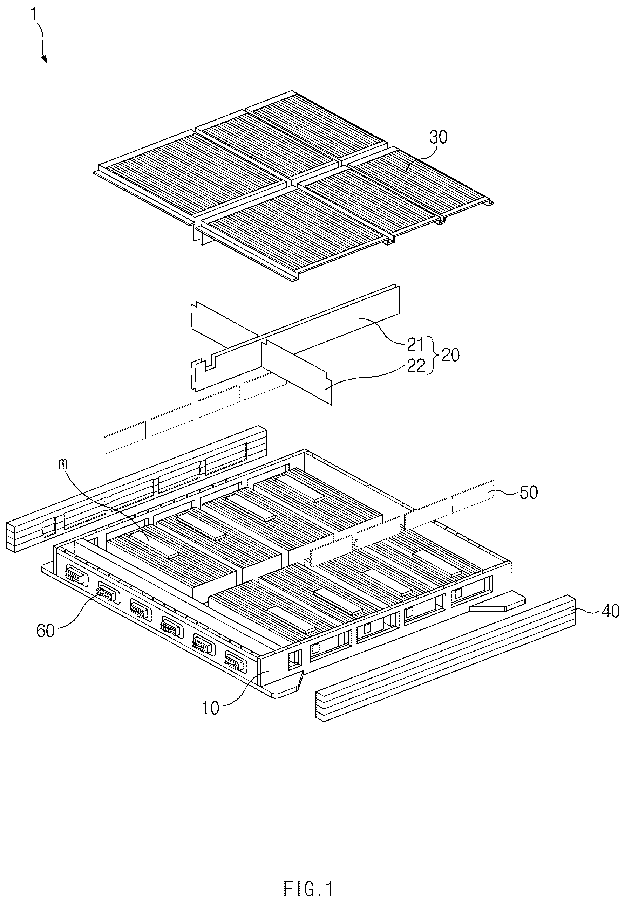

FIG. 1 shows an exploded perspective view of a battery pack 1 according to Embodiment 1 of the present disclosure.

Referring to FIG. 1, the battery pack 1 according to Embodiment 1 of the present disclosure may include a battery module m, a housing 10, a venting cover 30, a separation plate 20, a venting channel, a valve plate 50, and a discharge unit 60.

The battery module m may be provided in plurality. The housing 10 may accommodate a plurality of battery modules m. The plurality of battery modules m may be accommodated inside the housing 10, being spaced apart at a predetermined interval. The battery module m may be provided in the appearance of a rectangular prism having an overall longitudinal direction. The battery modules m may be arranged, for example, in two rows in the inner space of the housing 10.

The housing 10 may be formed in the overall shape of a rectangular prism to accommodate a plurality of battery modules m and may have an open top surface.

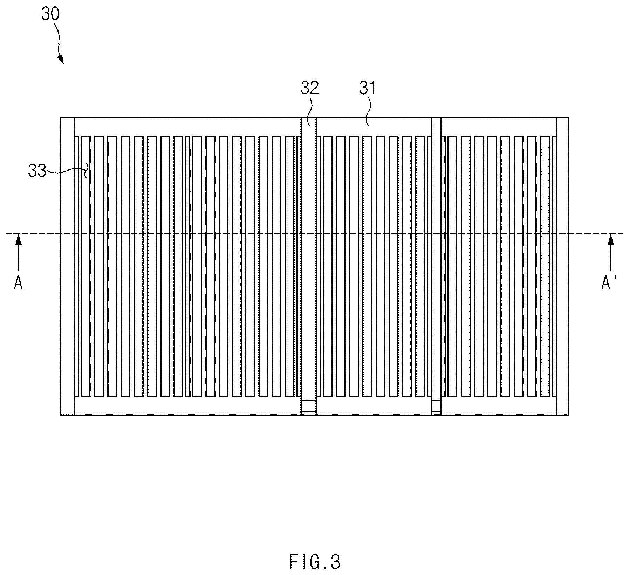

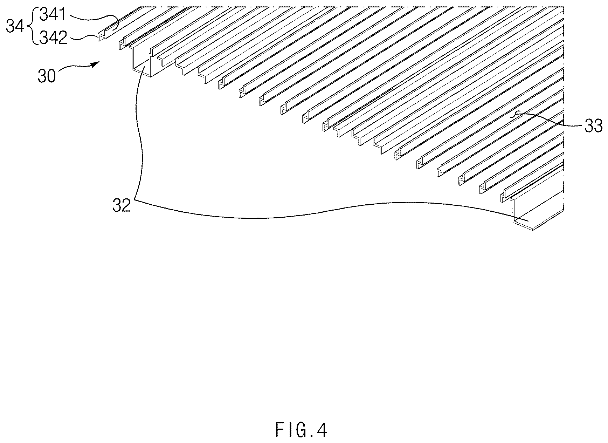

The venting cover 30 may be provided to be coupled to the housing 10. The venting cover 30 may be coupled to the upper side of the housing 10 and may cover the plurality of battery modules m accommodated in the housing 10. The venting cover 30 may be provided to guide the flow of gas released from the battery modules m when gas is generated from at least some battery modules m among the plurality of battery modules m accommodated in the housing 10. To this end, the venting cover 30 may include a slit through which gas may pass and flow, and a separation protrusion that spatially separates the neighboring battery modules m. The venting cover 30 may be made of a metal material (e.g., aluminum) to withstand the high-temperature gas released from the battery module m. The shape and function of the venting cover 30 will be described in detail in FIGS. 3 and 4 to be described later.

The separation plate 20 may be located in the housing 10. The separation plate 20 may be disposed between a plurality of battery modules m accommodated inside the housing 10. The separation plate 20 may be disposed between the battery modules m to prevent heat transfer between the neighboring battery modules m. The separation plate 20 may be provided in the form of a partition wall between the plurality of battery modules m arranged therebetween. The separation plate 20 may be made of, for example, a mica material having insulating properties to prevent heat transfer, but is not limited thereto.

The separation plate 20 may include a first plate 21 and a second plate 22. The first plate 21 may be formed inside the housing 10 to extend from one end of the housing 10 toward the other end. For example, the first plate 21 may be disposed at a central portion across the plurality of battery modules m arranged in two rows to spatially separate the two rows of battery modules m into each row. The second plate 22 may be formed in plural pieces. The second plate 22 may be disposed perpendicular to the first plate 21, and the plurality of the second plates 22 may be disposed side by side at a predetermined interval. The second plate 22 may be disposed between a plurality of battery modules m separated into two rows by the first plate 21 and located on both sides of the battery module m. In other words, one battery module m may be located between the neighboring second plates 22.

FIG. 1 shows one second plate 22, which is for ease of understanding, and it should be noted that the battery pack 1 according to Embodiment 1 of the present disclosure may include a plurality of second plates 22.

By adopting the configuration of the first plate 21 and the second plate 22, the heat transfer to neighboring battery modules m may be greatly reduced even if heat is generated in each battery module m, thereby significantly improving the thermal stability of the battery pack.

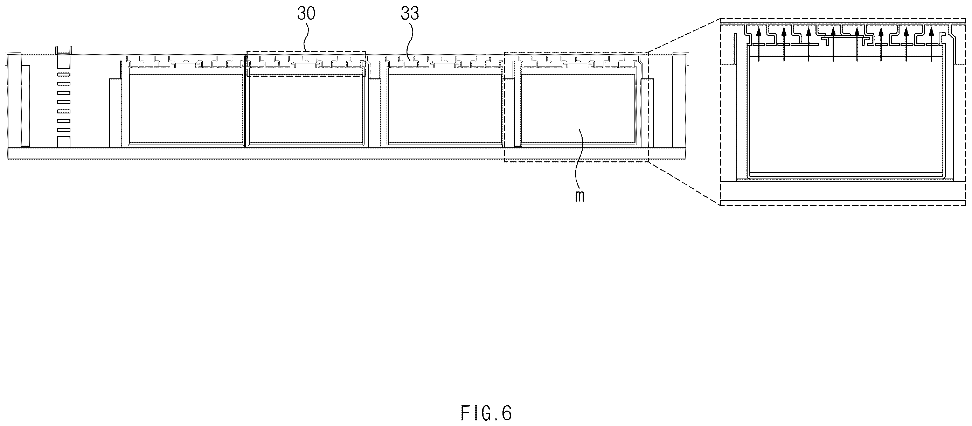

The venting channels 40 may be disposed on both sides of the housing 10. Therefore, the venting channel 40 may be provided as a pair. The venting channel 40 may be provided to be fastened to both sides of the housing 10. When gas is released from the battery module m, the gas may pass through the slit of the venting cover 30 and flow toward the venting channel 40. After passing through the slit, the gas may flow into the venting channel 40. That is, the venting channel 40 may serve as a guide for the gas generated from the battery module m to flow along the side of the housing. The gas flowing into the venting channel 40 may be directed to the discharge unit 60 formed in the housing and may be discharged to the outside through the discharge unit 60. The flow path of the gas released from the battery module m will be described in detail in FIGS. 6 to 8 to be described later.

The valve plate 50 may be disposed between the battery module m accommodated inside the housing 10 and the venting channel 40. The valve plate 50 may be provided to be ruptured open when gas is released from the battery module m. In other words, the valve plate 50 may serve as a valve whose opening and closing are controlled depending on whether gas is released or not. For example, the valve plate 50 may be formed in a corresponding number for each battery module m. The valve plates 50 may be placed parallel to the first plate 21 and perpendicular to the second plate 22. The valve plates 50 are independently controlled according to the gas release state of the corresponding battery module m, and even if gas is released from one battery module m to cause the corresponding valve plate 50 to be ruptured open, the valve plates of neighboring battery modules m may remain closed.

The discharge unit 60 may be formed in the housing 10. The discharge unit 60 may include a plurality of discharge holes formed on one side surface of the housing 10. The discharge unit 60 may be provided to discharge the gas flowing through the venting channel 40 to the outside of the housing 10.

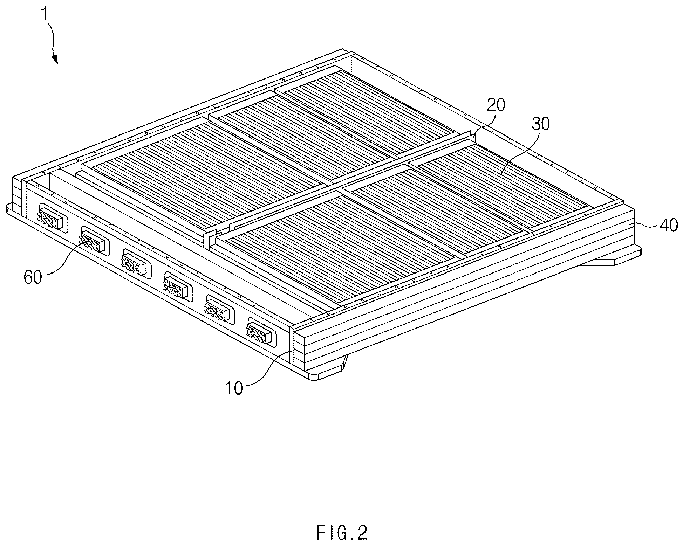

FIG. 2 shows a combined perspective view of a battery pack 1 according to Embodiment 1 of the present disclosure.

Referring to FIG. 2, a plurality of battery modules are arranged in the inner space of the housing 10, and the venting cover 30 may be coupled to the housing 10 to cover the upper portion of the battery module. The separation plate 20 may be located between the battery modules to prevent or reduce heat transfer between the battery modules. The venting channel 40 may be coupled to the side surface of the housing 10 to form a flow path through which gas released from the battery module flows. The discharge unit 60 including a plurality of discharge holes may be formed on another side surface of the housing 10 to discharge the gas flowing from the venting channel 40 to the outside of the housing 10.

FIGS. 3 and 4 each show the shape of the venting cover 30 according to Embodiment 1 of the present disclosure. FIG. 3 is a top plan view of the venting cover 30, and FIG. 4 shows a partial perspective view taken along the cutting line A-A' in FIG. 3.

Referring to FIGS. 3 and 4, the venting cover 30 according to Embodiment 1 of the present disclosure may include a cover body 31 and a separation protrusion 32. The cover body 31 may have a slit 33 formed through which gas released from the battery module may pass. The slits 33 may be formed in plurality and arranged side by side at a predetermined distance apart from each other.

The separation protrusion 32 may be formed to protrude from the bottom surface of the cover body 31. The separation protrusions 32 may be provided to separate each of the spaces where neighboring battery modules are accommodated so as to prevent gas from being transferred to neighboring battery modules when the gas is released from the battery module. Therefore, one separation protrusion 32 may come into contact with the upper portion of a pair of neighboring battery modules, respectively. The cross-sectional shape perpendicular to the longitudinal direction of the separation protrusion 32 may be formed in a U-shape. By adopting the configuration of the separation protrusion 32, the neighboring battery modules m are spatially separated from each other, so that the impact on the adjacent battery module m may be greatly reduced even if heat and gas are released from one battery module m, thereby significantly improving the stability of the entire battery pack.

The venting cover may further include a guide unit 34. The guide unit 34 may be formed to protrude and extend from the cover body 31. The guide unit 34 may be formed on at least a portion of the perimeter of the slit 33 formed in the cover body 31. The guide unit 34 may be formed to extend along the longitudinal direction of the slit 33. The guide unit 34 may be formed in a direction away from the slit. The guide units 34 may be formed on both sides of one slit 33 in the longitudinal direction, and the directions in which the guide units 34 formed on both sides of one slit 33 extend may be different.

For example, the guide unit 34 may include a first guide unit 341 extending in one direction perpendicular to the cover body 31 and a second guide unit 342 extending in a direction opposite to the first guide unit 341. The first guide unit 341 and the second guide unit 342 may be disposed in a staggered arrangement, so that the second guide unit 342 may be disposed between the pair of first guide units 341 and the first guide unit 341 may be disposed between the pair of second guide units 342. In this way, by adopting a configuration in which the first guide unit 341 and the second guide unit 342 are formed in a staggered arrangement, and the separation protrusion 32 is formed in the form of a U-shaped groove, the venting cover 30 may be manufactured by a press method. That is, the ease of manufacturing the venting cover 30 may be greatly improved.

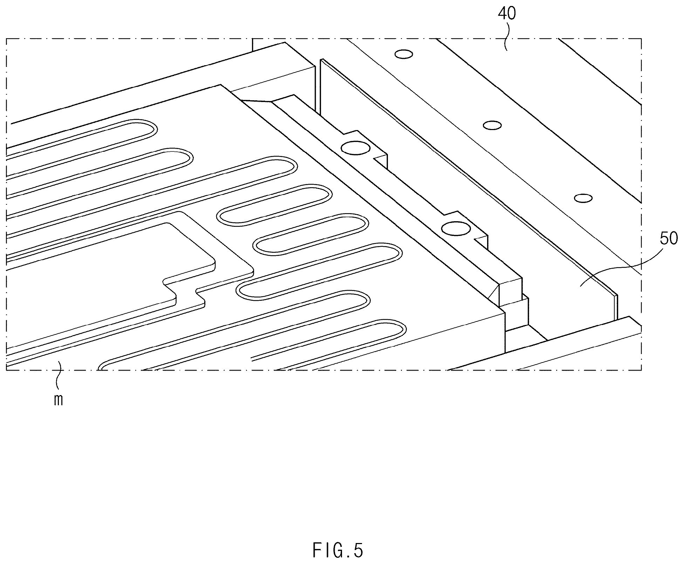

FIG. 5 is a partial perspective view showing a valve plate 50 of a battery pack according to Embodiment 1 of the present disclosure.

Referring to FIG. 5, the valve plate 50 of the battery pack according to Embodiment 1 of the present disclosure may be disposed between the battery module m accommodated in the housing and the venting channel 40 fastened to the side of the housing. The valve plate 50 may be ruptured open or remain closed depending on whether gas is released from the battery module m. When gas is released from the battery module m, the valve plate 50 is ruptured open, and thus the gas released from the battery module m may flow into the venting channel 40. At this time, the gas released from the battery module m may include both gas released from the upper side of the battery module m and gas released from the side of the battery module m.

In contrast, when gas is not released from the battery module m, the valve plate 50 may remain closed. In this case, even if gas is released from the neighboring battery module m and flows through the venting channel 40, the inflow of the gas may be prevented due to the valve plate 50. Therefore, the overall stability of the battery pack may be greatly improved.

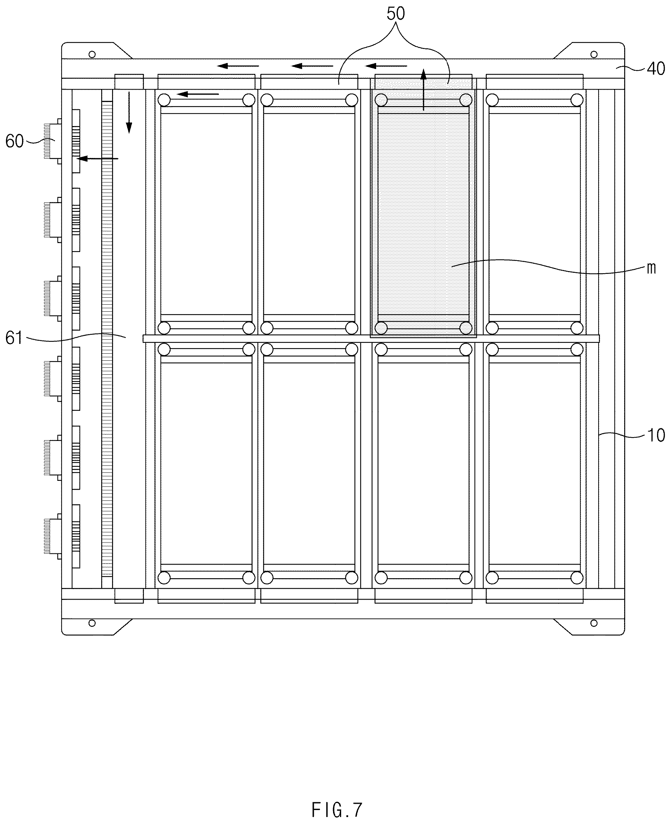

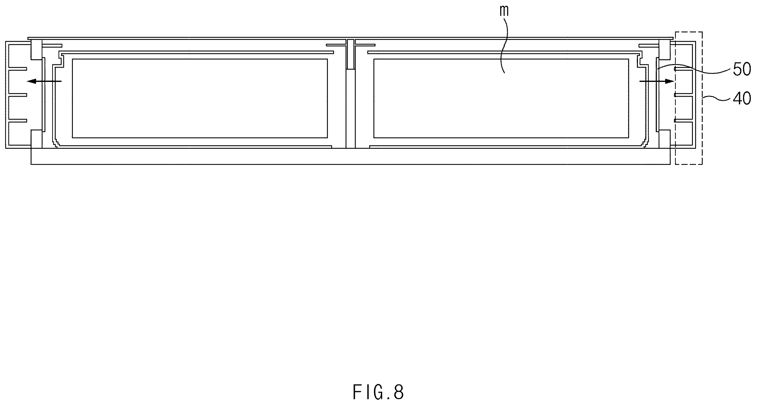

Referring to FIGS. 6 to 8, the gas flow of the battery pack according to Embodiment 1 of the present disclosure is illustrated. FIG. 6 is a side view showing gas passing through the venting cover 30, FIG. 7 is a plan view of the battery pack when viewed from above, and FIG. 8 is a side view showing gas directed toward the venting channel 40.

Referring to FIGS. 6 to 8, when gas is generated from one battery module m among the plurality of battery modules m accommodated in the housing 10, the gas may pass through the venting cover 30 covering the upper side of the battery module m. Since most of the gas generated from the battery module m is released through the upper portion of the battery module, most of the gas may flow through the venting cover 30. The gas may pass through the slit 33 formed in the venting cover 30. At this time, the longitudinal direction of the slit 33 is formed in a direction toward the venting channel 40, so that the gas passing through the venting cover 30 may be guided to the venting channel 40.

In the process of the gas being directed to the venting channel 40, the valve plate 50 disposed between the battery module m and the venting channel 40 may be ruptured open. At this time, the valve plates 50 of the neighboring battery modules and other battery modules except for the battery module m from which gas is released may remain unopened to prevent the inflow of gas flowing into the venting channel 40.

The gas in the battery module m may also be released through the side of the battery module m. In this case, the gas may pass through the ruptured valve plate 50 and flow directly toward the venting channel 40.

The gas flowing through the inside of the venting channel 40 may pass through a receiving chamber 61 provided inside the housing 10 and may be discharged to the outside through the discharge unit 60 formed on one side surface of the housing 10. The discharge unit 60 may include a plurality of discharge holes formed through one side surface of the housing 10.

### Embodiment 2

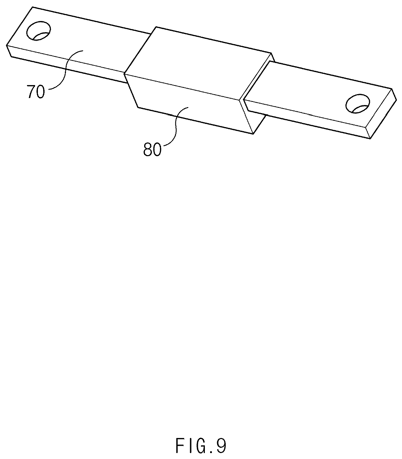

FIGS. 9 to 11 show enlarged perspective views of a battery pack according to Embodiment 2 of the present disclosure.

Embodiment 2 of the present disclosure may be different from Embodiment 1 in that it further includes a busbar 70 and an insulating unit 80. Contents common to Embodiment 1 will be omitted as much as possible, and the description of Embodiment 2 will focus on the differences from Embodiment 1.

FIG. 9 is a perspective view showing the shapes of the busbar 70 and the insulating unit 80 of a battery pack according to Embodiment 2 of the present disclosure.

Referring to FIG. 9, the busbar 70 may be formed in the shape of a cuboidal beam having a longitudinal direction. The busbar 70 may be provided to electrically connect neighboring battery modules to each other.

The insulating unit 80 may be formed in at least a portion of the busbar 70. The insulating unit 80 may be formed, for example, at the central portion of the busbar 70 in the longitudinal direction, and may be provided to surround the perimeter of the central portion of the busbar 70.

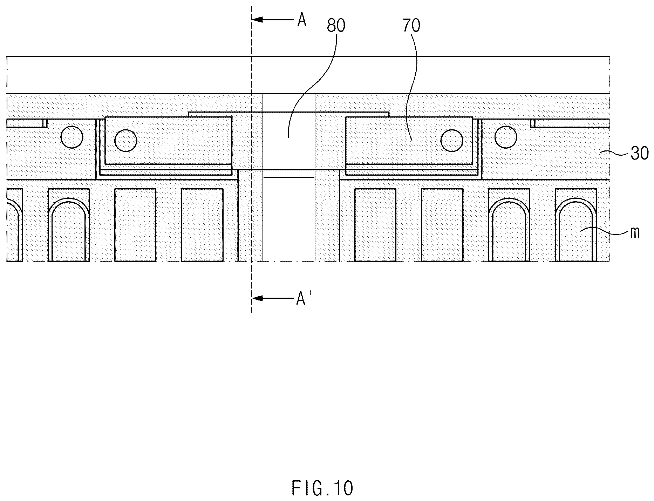

FIG. 10 is a partial schematic view showing the mounting form of the busbar 70 and the insulating unit 80 of a battery pack according to Embodiment 2 of the present disclosure.

Referring to FIG. 10, the busbar 70 of the battery pack according to Embodiment 2 of the present disclosure may be provided between a pair of neighboring battery modules m to electrically connect the pair of neighboring battery modules m. Both ends of the busbar 70 may be in electrical contact with the battery modules, respectively.

The venting cover 30 may cover the battery module m and the upper side of the busbar 70 mounted on the battery module m. The venting cover 30 may be made of a metal material so as to be exposed to high-temperature gas as described above. In this case, the insulating unit 80 may insulate the busbar 70 and the venting cover 30 so that the venting cover 30 made of a metal material may be electrically insulated from the busbar 70 and the battery module m. Therefore, the insulating unit 80 may be disposed between the venting cover 30 and the busbar 70 to physically/electrically separate the venting cover 30 and the busbar 70. To this end, the insulating unit 80 may be formed of a non-conductor such as rubber.

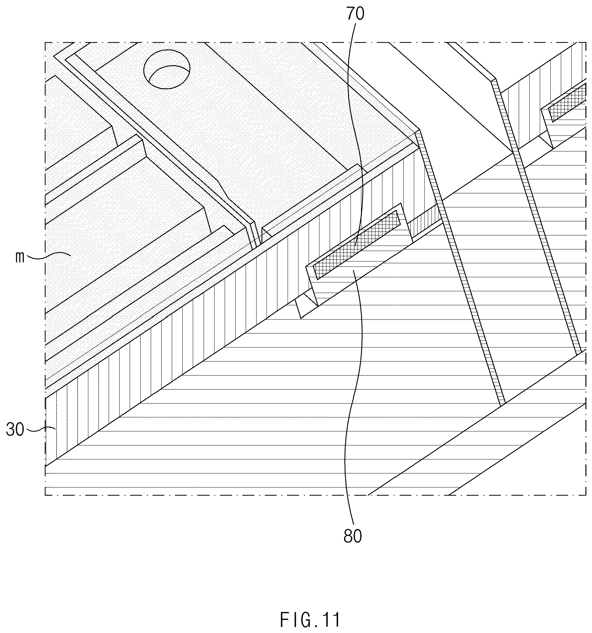

FIG. 11 shows a partial perspective view taken along the cutting line A-A' in FIG. 10.

Referring to FIG. 11, the insulating unit 80 may insulate the busbar 70 and the venting cover 30 by surrounding the central portion of the busbar 70. In this case, a groove portion provided to accommodate the insulating unit 80 may be formed in the venting cover 30.

The present disclosure may provide a secondary battery pack including a plurality of the secondary battery modules reviewed above.

The present disclosure has been hereinabove described with regard to a limited number of embodiments and drawings, but the above description is merely an illustrative description of the technical ideas of the present disclosure, and various modifications and variations will be possible by persons having ordinary skill in the technical field pertaining to the present disclosure without departing from the essential characteristics of the present disclosure.

Therefore, the embodiments disclosed in the present disclosure are not intended to limit the technical ideas of the present disclosure, but for illustrative purposes, and the scope of the technical ideas of the present disclosure is not limited by these embodiments. The scope of protection of the present disclosure should be interpreted in accordance with the claims below, and all technical ideas within the scope equivalent thereto should be construed as being included in the scope of the present disclosure.

### [List of Reference Numerals]

1: Battery pack
10: Housing
20: Separation plate
21: First plate
22: Second plate
30: Venting cover
31: Cover body
32: Separation protrusion
33: Slit
34: Guide unit
341: First guide unit
342: Second guide unit
40: Venting channel
50: Valve plate
60: Discharge unit
m: Battery module

## Claims

1. A battery pack comprising:
a plurality of battery modules;
a housing accommodating the plurality of battery modules; and
a venting cover coupled to the housing to cover the battery module and guiding the flow of gas released from the battery module,
wherein the venting cover comprises:
a cover body having a plurality of slits formed therein for passage of gas released from the battery module; and
a separation protrusion protruding from the bottom surface of the cover body to separate the plurality of battery modules so that gas movement between the plurality of battery modules is prevented.

2. The battery pack according to claim 1,
wherein the separation protrusion is located between two neighboring battery modules.

3. The battery pack according to claim 2,
wherein the venting cover further comprises a guide unit formed on at least a portion of the perimeter of the slit and extending in a direction away from the slit.

4. The battery pack according to claim 3,
wherein the guide unit comprises a first guide unit extending to one side of the cover body and a second guide unit extending to the other side of the cover body, wherein the first guide unit and the second guide unit are disposed in a staggered arrangement.

5. The battery pack according to claim 1, further comprising:
a separation plate disposed between the plurality of battery modules to prevent heat transfer between the plurality of battery modules.

6. The battery pack according to claim 5,
wherein the separation plate comprises:
a first plate extending from one end of the housing toward the other end; and
a plurality of second plates disposed perpendicular to the first plate.

7. The battery pack according to claim 6,
wherein the plurality of second plates are disposed side by side at a predetermined interval, and the battery module is located between the neighboring second plates.

8. The battery pack according to claim 1, further comprising:
venting channels disposed on both sides of the housing and allowing gas passing through the slit to flow inside.

9. The battery pack according to claim 8, further comprising:
a valve plate disposed between the battery module and the venting channel, and capable of being ruptured open when the gas is released from the battery module.

10. The battery pack according to claim 9,
wherein the valve plate is provided to block the gas flowing into the venting channel from flowing into the battery module in a state where it is not ruptured open.

11. The battery pack according to claim 8,
wherein a discharge unit provided to discharge the gas flowing from the venting channel to the outside of the housing is formed in the housing.

12. The battery pack according to claim 1, further comprising:
a busbar electrically connecting the neighboring battery modules to each other; and
an insulating unit surrounding a portion of the busbar to electrically insulate the busbar and the venting cover.

13. The battery pack according to claim 12,
wherein the insulating unit is provided to surround the perimeter of the busbar at a central portion in the longitudinal direction of the busbar.

14. A battery device comprising a plurality of battery packs stated in claim 1.
